# EUROPÄISCHE PATENTSCHRIFT

(11) **EP 0 302 921 B1**
(45) Veröffentlichungstag und Bekanntmachung des Hinweises auf die Patenterteilung: **28.04.1993**
(21) Anmeldenummer: 88901792.7
(22) Anmeldetag: 25.02.1988
(51) Int. Cl.: G09B 9/04, A63B 21/00

(54) **SPORTARTEN-SIMULATOR**
SPORTS SIMULATOR
SIMULATEUR DE SPORTS

(30) Priorität: 26.02.1987 DE 3706250
(43) Veröffentlichungstag der Anmeldung: 15.02.1989
(73) Patentinhaber: FOERST, Reiner, D-51643 Gummersbach (DE)
(72) Erfinder: FOERST, Reiner, D-51643 Gummersbach (DE)
(74) Vertreter: Busse & Busse Patentanwälte
(86) Internationale Anmeldenummer: DE8800098
(87) Internationale Veröffentlichungsnummer: WO8806776

(56) Entgegenhaltungen:
- EP-A- 0 176 277
- EP-A- 0 199 442
- DE-A- 2 703 025
- DE-A- 3 218 086
- DE-A- 3 428 675
- GB-A- 2 114 901
- displays, vol. 2, No: 4, January 1981 (Guildford, surrey, GB), T.W. Rowley: "Computer generated imagery for training simulators", pages 199-202, see the whole document.

## Beschreibung

Die Erfindung bezieht sich auf eine Vorrichtung zur Simulation einer Sportart, bei der durch Muskelkraft des Benutzers Wege zurückgelegt werden, unter Verwendung eines Sportgerätes 1 mit einem Bewegungsmechanismus 7, der eine Abbremseinheit 6 oder eine Antriebseinheit 6a umfaßt, mit einem Bildschirm 8, auf dem das vom simulierten Sportler erblickte perspektivische Bild einer Umgebung mit Kurven, Steigungen und Gefällen und Gegnern darstellbar ist, einer Tastatur 61 zur Eingabe von Daten, einer Meßeinrichtung 11 zur Messung der Bewegungsgeschwindigkeit und/oder der Drehzahl n des Bewegungsmechanismusses, einer Meßeinrichtung 19 zur Messung der Bremskraft und/oder des Drehmomentes Mᵢₛₜ des Bewegungsmechanismusses, einem Videogenerator 9 mit Bildspeicher, mit dem ein Umgebungsbild erzeugbar ist
bungsbild in Abhängigkeit von Betriebsdaten des Bewegungsmechanismusses wie zum Beispiel der Drehzahl n veränderbar ist
des Benutzers sowie Rückmeldungen über gewählte Betriebszustände auf dem Bildschirm ausgebbar sind.

Derartige Vorrichtungen dienen der unterhaltsamen Verbesserung der körperlichen Kondition und der Gesundheit. Sie sind zum Radfahren, zum Rudern und zum Laufen in einfachen Ausführungen bereits bekannt.

So ist in der Offenlegungsschrift DE-A-32 18 086 ein Fahrrad-Trainingsgerät mit Situationsprogrammierung beschrieben. Bei diesem sind die zu simulierende Fahrtstrecke nicht durch einen elektronischen Videogenerator sondern durch Film oder Videoband aufgezeichnet. Dadurch entfällt die Möglichkeit, ein Identifikationsbild mit steuerbarer Tretkurbeldrehzahl im Bild darzustellen. Das Hinterrad wird bei dieser Vorrichtung bei Talfahrten angetrieben. Dadurch sind ein besonderer Antriebsmotor und ein rotierendes Hinterrad erforderlich, was die Sicherheit des Gerätes gegen Berührungen beeinträchtigt. Es wird eine echte Gangschaltung verwendet, was Aufwand und Verschleißanfälligkeit bedeutet.

In der UK Patent Application GB-A-2114 901 "Exercise Apparatus" sind die Meß- und Steuereinrichtungen eines Trainingsgerätes mit Bildschirm beschrieben, welches allerdings kein Simulator ist. Die Konstruktion des Trainingsgerätes und die Bilderzeugung sind nicht beschrieben.

In der Offenlegungsschrift DE-A-34 28 675 ist ein feststehendes Körperbewegungsgerät angemeldet, für welches jedoch kein Monitor verwendet wird. Die Konstruktion des Bewegungsgerätes ist nicht beschrieben. Der Schwerpunkt dieser Erfindung liegt vielmehr in der Einregulierung der Herzpulsfrequenz durch Steuerung der Belastung.

In der Patentschrift DE-C-2703025 ist ein Fahrsimulator beschrieben, der bei ebener Straße auch ein Zweirad simulieren kann. Hierbei wird gemäß der Schräglage des Zweirades in Kurven das Landschaftsbild gedreht. Der Einfluß einer Gangschaltung bleibt unberücksichtigt. Auch fehlt ein Vordergrundbild zur Identifikation zum Geschehen auf dem Bildschirm.

In der European Patent Application EP-A-0 199 442 "Exerciser" ist ein Computer beschrieben, der an einen Bewegungsmechanismus angeschlossen werden kann, um persönliche Daten eigeben und physikalische Meßdaten auswerten zu können. Für diese Erfindung wird kein Monitor verwendet.

In der European Patent Application EP-A-0 176 277 "Optimum exercise loading apparatus" ist ein Computer beschrieben, mit dem in optimaler Weise die Belastung durch ein Trainingsgerät an den Sauerstoffverbrauch des Benutzers angepaßt wird. Für diese Erfindung wird kein Monitor verwendet.

In der Zeitschrift 2449 Displays, Vol. 2, 1981, No.4, Guildford, Surrey, Great Britain ist ein Aufsatz von T.W. Rowley "Computer Generated Imagery for Training Simulators" enthalten, der über den Stand der Technik auf dem Gebiet der Echtzeit-Computer-Grafik für Simulatoren berichtet. Dieser bezieht sich jedoch nicht auf Sportarten-Simulatoren.

Der vorliegenden Erfindung liegt zunächst die Aufgabe zugrunde, eine Vorrichtung der eingangs genannten Art zu schaffen, mit der Sportarten zu simulieren sind, bei denen durch Muskel kraft des Benutzers Wege zurückgelegt werden, wie Radfahren, Rudern, Paddeln, Skilanglaufen, Schwimmen, Laufen, Treppensteigen, Klettern und dgl., mit der mit einfachen Mitteln ein Höchstmaß an Leistungsanreiz geschaffen wird und mit der sich der Benutzer weitgehend mit dem Geschehen auf dem Bildschirm identifizieren kann.

Darüberhinaus soll eine Vorrichtung geschaffen werden, die es erlaubt, das Bild eines Sportgegners bei Kurven in Schräglagen zu versetzen, ohne daß hierfür zusätzliche Bilder abzuspeichern sind.

Weiterhin soll eine Vorrichtung geschaffen werden, die es erlaubt, das Verhalten eines Fahrrades mit Gangschaltung und Freilauf zu simulieren.

Desweiteren soll im Rahmen der Erfindung ein Weg aufgezeichnet werden, verschiedene Sportgeräte und Bewegungsmechaniken zur Simulation solcher Sportarten zu schaffen, bei denen durch Muskel kraft des Benutzers Wege zurückgelegt werden, die mit einer Hardware-Schaltung ansteuerbar sind und die für breite Anwendungen wirtschaftlich herzustellen sind.

Zur Lösung der erstgenannten Aufgabenstellung zeichnet sich die Vorrichtung der eingangs genannten Art durch die im kennzeichnenden Teil des Anspruchs 1 angegebenen Merkmale aus. Hinsichtlich weiterer wesentlicher Ausgestaltungen der Erfindung, insbesondere auch zur Lösung der darüber hinaus angegebenen Teilaufgabenstellungen, wird auf die Unteransprüche verwiesen.

Die Erfindung sei nun anhand der Figuren näher erläutert. Es zeigen:

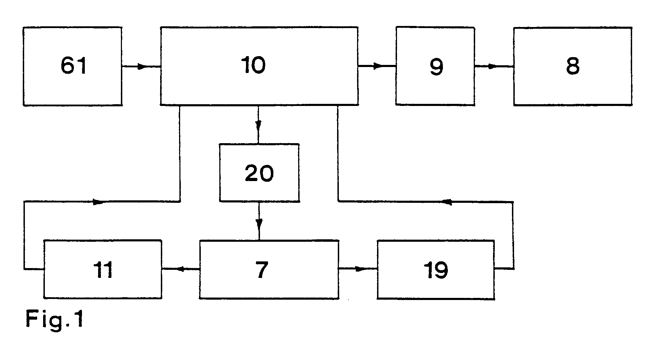

- Fig. 1: ein Blockschaltbild des Sportartensimulators gemäß Anspruch 1
- Fig. 2: eine bildliche Darstellung eines Identifikationsbildes am Beispiel eines Radfahrsimulators gemäß Anspruch 1

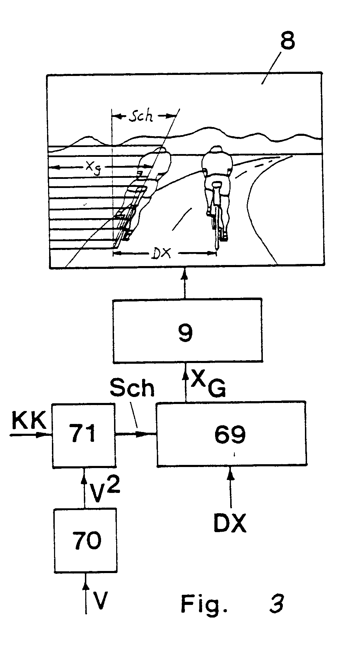

- Fig. 3: ein Blockschaltbild der Vorrichtungen zur Veränderung des Gegnerbildes gemäß Anspruch 2
- Fig. 4: ein Blockschaltbild des Computers mit den in Anspruch 3 angegebenen Merkmalen der Vorrichtung als Radfahr-Simulator mit Gangschaltung
- Fig. 5: eine Querschnittszeichnung eines Skilanglauf-Trainingsgerätes gemäß Anspruch 4 und 5
- Fig. 6: eine Querschnittszeichnung eines Kraul-Trainingsgerätes gemäß Anspruch 6
- Fig. 7: ein Strukturbild eines Lauf-Simulators gemäß Anspruch 7
Die Blockschaltbilder lassen offen, ob der Computer als Analogrechner oder Digitaltrechner aufgebaut ist. Naheliegend und wirtschaftlich ist es heute, einen Mikroprozessor mit Festwertspeichern, Schreib-Lese-Speichern, Zeitgeber-Bausteinen, Treibern, Eingangs/Ausgangs-Bausteinen, Analog/Digital-Wandlern, Digital/Analog-Wandlern und anderen Peripherie-Bausteinen zu verwenden. Der Videogenerator kann pixel-orientiert unter Verwendung von Konturen-Zählern, Komparatoren oder Schieberegistern oder raumkoordinaten-orientiert unter Verwendung schneller Grafik-Prozessoren und Echtzeit-Videorechnern aufgebaut sein. Dementsprechend sind in den Bildspeichern bildpunkt-bezogene, bildkonturen-bezogene oder raumbezogene Farbwerte abgespeichert.

Bild 1 zeigt ein Blockschaltbild des Sportarten-Simulators. Die einzelnen Blöcke sind im Oberbegriff und im kennzeichnenden Teil des Anspruchs 1 bestimmt.

Als Bildschirm 8 kommt eine Monitorröhre, ein Projektionsmonitor, eine Bildwand mit Video-Projektor oder neuartige bildpunktspeicher-orientierte Systeme infrage.

Der Regler 20 enthält einen Eingangsteil, der vom Computer 10 steuerbar ist und einen Kraftverstärkper mit Pulsbreitensteuerung, Amplitudensteuerung oder Frequenzsteuerung.

Der Bewegungsmechanismus 7 enthält bei den meisten Sportarten-Simulatoren eine Abbremseinheit, die nur in einer Drehrichtung läuft und aus einem elektrischen Gleichstromgenerator, Asynchrongenerator, Synchrongenerator, einer Wirbelstrombremse oder einer Magnetpulverbremse bestehen kann. Sie muß vom Regler 20 her ansteuerbar sein. Bei manchen Sportarten-Simulatoren wie einem Lauf-Simulator muß der Bewegungsmechanismus 7 eine Antriebseinheit enthalten, die zwar nur in einer Richtung läuft, aber Drehmomente in beiden Richtungen aufbringt. Hierzu können Gleichstrommotoren, Asynchronmotoren oder Synchronmotoren verwendet werden. Die übrigen Merkmale des Bewegungsmechanismus 7 sind für die einzelnen Sportarten verschieden und in den folgenden Ansprüchen näher ausgeführt.

Die Drehzahl-Meßeinrichtung 11 kann als Tachogenerator oder Pulsgeber mit nachgeschaltetem analogen Frequenz/Spannungs-Wandler oder digitalem Frequenz/Datenwort-Wandler ausgeführt sein.

Die Drehmomenten-Maßeinrichtung 19 kann mit Dehnungs-Meßstreifen oder - einfach - als Ankerstrom-Meßeinrichtung des im Bewegungsmechanismus 7 verwendeten Elektromotors ausgeführt sein. Bei nichtlinearer Beziehung zwischen Ankerstrom und Drehmoment ist die Nichtlinearität mittels eines Kennlinienbildners im Computer 10 zu kompensieren.

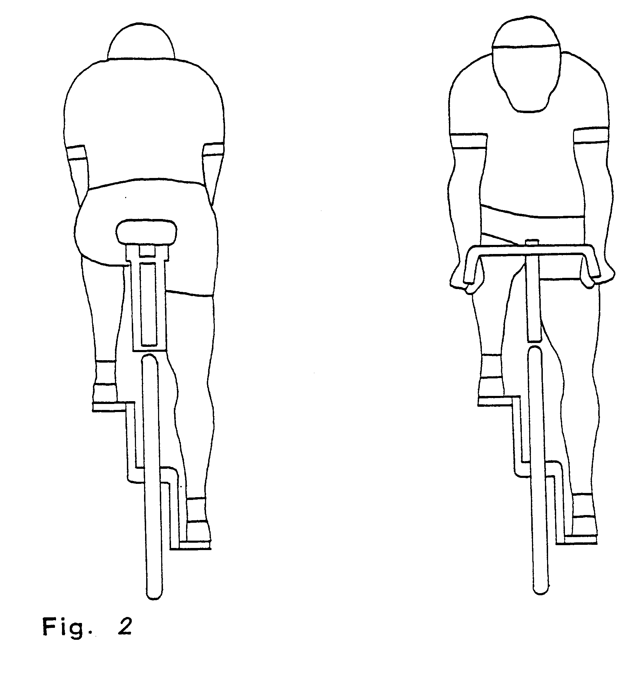

Fig. 2 zeigt in bildlicher Darstellung einen Radfahrer von hinten und von vorne als Beispiel für ein Gegnerbild oder ein Identifikationsblid. Das rechte Bild, welches den Radfahrer von vorne zeigt, wird als Rückspiegelbild eines Gegners dann eingeblendet, wenn sich der Gegner im toten Sichtbereich des Benutzers befindet.

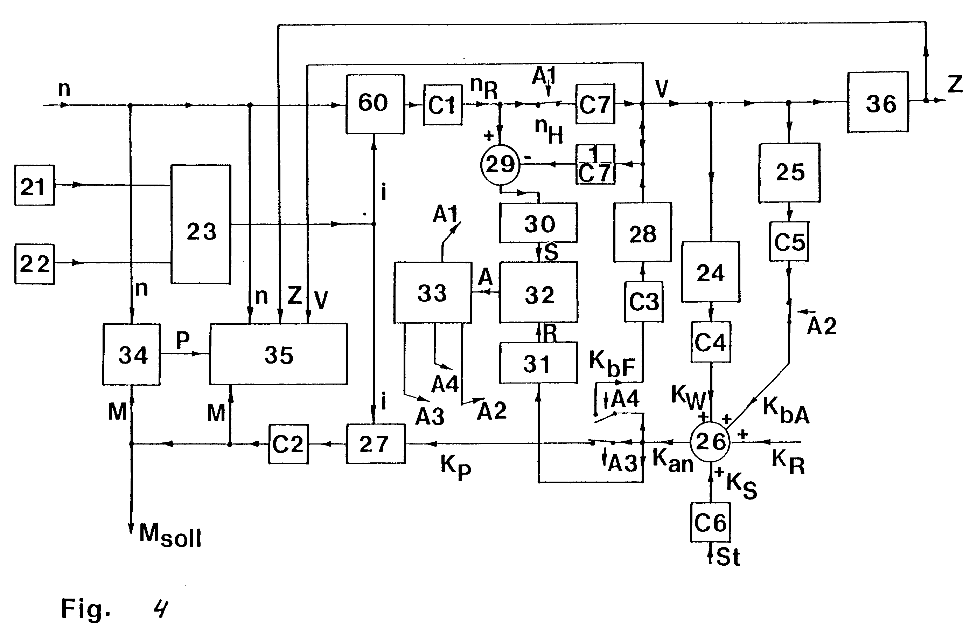

Fig. 4 zeigt ein Blockschaltbild des Computers mit den Merkmalen eines Radfahr-Simulators mit Gangschaltung. Die für die Simulation der Gangschaltung eigenartigen Blöcke sind im Anspruch 3 beschrieben. Dieses Blockschaltbiid beinhaltet zwei recht verschiedene Teilblockschaltbilder, von denen das eine eine Vorrichtung zur Simulation einer Fahrradfahrt im Freilauf beschreibt. Diese beiden Blockschaltbilder sind durch den Wert des digitalen Signals A aufrufbar. Im Antriebszustand folgt die Geschwindigkeit V über das gewählte Übersetzungsverhältnis i immer starr der Drehzahl n der Tretkurbel. Im Freilaufzustand stellt sich die Geschwindigkeit nach Maßgabe des Kräftegleichgewichtes an der Additionsstufe 26 ein.

Ein Sprung in der Drehzahl n erfordert im Antriebszustand im Vorbild eine unendlich hohe Antriebskraft Kₐₙ. Das dies in der Simulatoren-Vorrichtung nicht möglich ist, wird empfohlen, eine Glättungseinrichtung in den Zweig des Drehzahlsignals n einzuschleifen.

In Fig. 4 ist angenommen, daß das vom Benutzer während der Fahrt vorgegebene Übersetzungsverhältnis i mittels der beiden Taster "Höher" 21 und "Tiefer" 22 und des Vorwärts-Rückwärtszählers 23 gebildet wird.

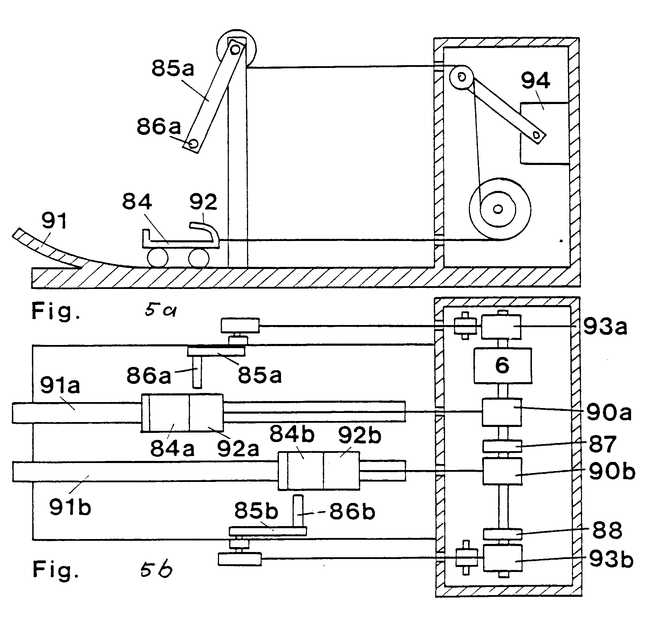

Fi.g 5 zeigt beispielhaft zwei Querschnittszeichnungen eines Skilanglauf-Trainigsgerätes gemäß der Erfindung. Fig. 5a zeigt die Ansicht Von der Seite, Fig. 5b die Ansicht von oben. Die einzelnen Teile sind in den Ansprüchen 4 und 5 beschrieben.

In diesem Ausgestaltungsbeispiel sind zur Kraftübertragung Seile vorgesehen. Stattdessen kann man zum Beispiel auch Zahnräder, Zahnriemen, und/oder Zahnstangen verwenden. Das übersetzungsverhältnis zwischen dar Bewegung des Fußschlittens 84 und der Hebelarme 85 ist so zu wählen, daß beim Benutzer der Eindruck entsteht, er würde sich mit Stöcken auf dem Boden abstoßen.

Im übrigen ist durch die Freilaufgetriebe 90 und 93 sichergestellt, daß die Armbewegung unabhängig von der Beinbewegung ist. Im Beispiel der Fig. 5 ist vorgesehen, daß auch der rechte Fußschlitten 84b unabhängig vom linken Fußschlitten 84a und der rechte Hebelarm 85b unabhängig vom linken Hebelarm 85a zu betätigen sind. Sie können jedoch auch mechanisch über besondere Getriebe oder Hebelstangen so geführt werden, daß sie sich starr gegensinnig bewegen.

Die Schienen 91a und 91b sind deshalb hinten hochgebogen, damit der Benutzer in natürliche Weise mit großer Schrittweite trainieren kann, ohne die Füße von den Fußschlitten nehmen zu müssen.

Um dem Benutzer auf dem Monitor anzeigen zu können, wie sich seine Gesamtleistung aus der Leistung der Beine und der der Arme zusammensetzt, ist die Meßeinrichtung 94 vorgesehen.

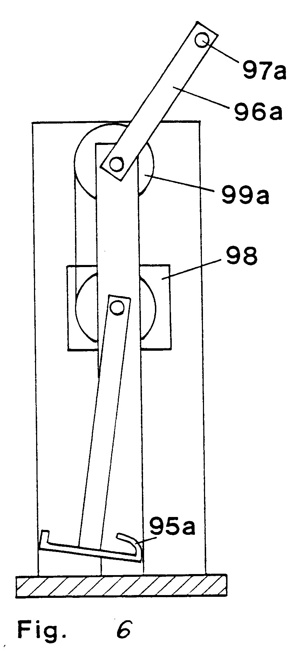

Fig. 6 zeigt beispielhaft eine Querschnittszeichnung eines Kraul-Trainingsgerätes gemäß der Erfindung. Die Einzelteile sind in Anspruch 6 beschrieben. Dieser Vorrichtung liegt die Erkenntnis zugrunde, daß es für eine breite Anwendung wenig sinnvoll ist, das, Schwimmen in horizontaler Lage zu trainieren, weil bei einem Trocken-Trainingsgerät die natürliche Auftriebskraft des Wassers nicht hinreichend gut simuliert werden kann. Dagegen ist es sinnvoll, bei kreisender Bewegung der Arme und Deine Drehmomente zu übertragen, wobei normalerweise die Beine beidseitig, die Arme dagegen nur in einer Richtung belastet werden sollten. In Sonderausführungen kann man jedoch von diesem Prinzip abgehen und auch die Arme beidseitig und/oder die Beine nur einseitig belasten. In jedem Falle müssen die Länge der Hebelarme für die Bein- und die Armbewegung durch eine Einstellmöglichkeit der Körpergröße des Benutzers anpaßbar sein. Die Kraftübertragungseinrichtung von den Hebelarmen auf die Abbremseinheit kann wiederum anders als in der Figur dargestellt ausgeführt werden.

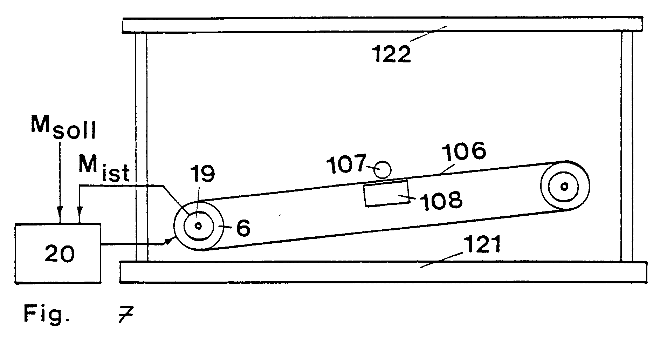

Fig. 7 zeigt ein Strukturbild eines Lauf-Simulators mit Antriebseinheit 109. Es beinhaltet ein Lauf-Trainingsgerät, bestehend aus Grundplatte 121, Geländer 122 und schrägliegendem Laufband 106. Solche Trainingsgeräte mit Antrieb und regulierbarer Geschwindigkeit sind bekannt. Fig. 7 zeigt weiterhin Funktionseinheiten gemäß der Erfindung, die in Anspruch 7 beschrieben sind.

Während bei den bekannten Lauf-Trainingsgeräten die Geschwindigkeit nur über die Tastatur vorgebbar ist, bewirkt die Vorrichtung gemäß der Erfindung mittels der beschriebenen Grenzsignale UEV und UEH, daß sich die Laufbandgeschwindigkeit automatisch der Schrittgschwindigkeit anpaßt.

Die vom Benutzer aufgewendete biologische Leistung ist beim Laufen - insbesondere bei kleinem Neigungswinkel des Laufbandes - durch eine Drehmomentenmessung nicht zu bestimmen. Deshalb ist eine Berechnung der vergleichbaren Benutzerleistung P_{B} erforderlich.

Fig. 7 enthält weiterhin vertikal übereinander angeordnete Lichtschranken 107a und 107b gemäß Anspruch 8. Diese Zusatzausstattung ermöglicht es, den Lauf-Simulator als Hürdenlauf-Simulator zu betreiben.

## Patentansprüche

1. Vorrichtung zur Simulation einer Sportart, bei der durch Muskelkraft des Benutzers Wege zurückgelegt werden, unter Verwendung eines Sportgerätes (1) mit einem Bewegungsmechanismus (7), der eine Abbremseinheit (6) oder eine Antriebseinheit (6a) umfaßt, mit einem Bildschirm (8), auf dem das vom simulierten Sportler erblickte perspektivische Bild einer Umgebung mit Kurven, Steigungen und Gefällen und Gegnern darstellbar ist, einer Tastatur (61) zur Eingabe von Daten, einer Meßeinrichtung (11) zur Messung der Bewegungsgeschwindigkeit und/oder der Drehzahl (n) des Bewegungsmechanismusses, einer Meßeinrichtung (19) zur Messung der Bremskraft und/oder des Drehmomentes (Mᵢₛₜ) des Bewegungsmechanismusses, einem Videogenerator (9) mit Bildspeicher, einem Computer (10), mit dem das Umgebungsbild in Abhängigkeit von Betriebsdaten des Bewegungsmechanismusses wie zum Beispiel der Drehzahl (n) veränderbar ist, mit dem Leistungsdaten des Benutzers sowie Rückmeldungen über gewählte Betriebszustände auf dem Bildschirm ausgebbar sind, **dadurch gekennzeichnet,** daß
a) über den Computer (10) auf dem Bildschirm (8) das Bild der simulierten Umgebung erzeugbar ist, daß
b) mit dem Computer (10) sowie den zugehörigen Eingangs-/Ausgangsbausteinen durch Software-Änderung und durch Austausch des Sportgerätes verschiedene Sportarten wie Radfahren, Rudern, Paddeln, Skilanglaufen, Schwimmen, Laufen, Treppensteigen, Klettern und dergleichen in Abhängigkeit von physikalischen Gegebenheiten in Ausübung der Sportart und in Abhängigkeit von wählbaren, geometrischen Bezugsgrößen eines Vorbildes simulierbar sind und daß
c) der Videogenerator (9) einen Teilbildspeicher (50) zur Abspeicherung der Bilder eines Sportlers in verschiedenen Bewegungsphasen und Schräglagen konstanter Größe in Ansicht von hinten enthält, mit dem sich der Benutzer identifiziert, und daß die Bewegungsphasen und Schräglagen dieses Identifikationsbildes vom Computer (10) berechenbar sind, und daß d) ein Regler (20) vorgesehen ist, mit dem die Bremskraft (Mᵢₛₜ) und/oder die Drehzahl verschiedener Bewegungsmechanismen (7) einem entsprechenden vom Computer ausgebbarem Sollwert (Mₛₒₗₗ) nachführbar ist.

2. Vorrichtung nach Anspruch 1, **dadurch gekennzeichnet,** daß
a) das Gegnerbild durch linearen horizontalen Versatz der einzelnen Zeilen in Schräglage gebracht werden kann und daß
b) diese Schräglage mittels einer Quadrierstufe (70) und einer Multiplizierstufe (71) vom Produkt Kurvenkrümmung (KK) mal Geschwindigkeit (V²) berechenbar ist.

3. Vorrichtung nach Anspruch 1, **dadurch gekennzeichnet,** daß im Fahrcomputer (10)
a) über die Tastatur (61) Werte (i) zwischen 1 und 12 entsprechend den 12 Gängen einer Rennrad-Gangschaltung in den Computer (10) eingebbar sind, daß
b) eine Multiplizierstufe (60) mit einer Bewertungseinrichtung (C1) vorgesehen ist, in der das Drehzahlsignal (n) mit dem Signal (i) für den gewählten Gang unter Berücksichtigung des konstanten Faktors (C1) multiplizierbar ist, und die das Signal für die Drehzahl (n_{R}) des simulierten Kettenritzels eines Fahrrades mit Kettenschaltung abgibt, daß
c) ein Schalter (A1) vorgesehen ist, der im Antriebszustand (A) geschlossen und im Freilaufzustand offen ist und der bewirkt, daß im Antriebszustand das Geschwindigkeitssignal (V) über einen konstanten Faktor (C7) aus dem Drehzahlsignal (n_{R}) des Kettenritzels berechnet wird, daß
d) eine Differenzierstufe (25) mit einem konstanten Bewertungsfaktor (C5) vorgesehen ist, mittels derer aus dem Geschwindigkeitssignal (V) die zur Beschleunigung des simulierten Fahrrades im Antriebszustand notwendige Beschleunigungskraft (K_{bA}) berechnet wird, daß
e) ein Schalter (A2) vorgesehen ist, der im Antriebszustand (A) geschlossen und im Freilaufzustand offen ist und mit dem das Beschleunigungssignal (K_{bA}) zu- und abschaltbar ist, daß
f) eine Additionsstufe (26) vorgesehen ist, der die Signale (K_{W}) für die Fahrtwindkraft, (K_{bA}) für die Beschleunigung im Antriebszustand, (K_{S}) für die Schwerkraft und eine konstante Reibungskraft (K_{R}) zuführbar sind und die am Ausgang (Kₐₙ) im Antriebszustand die zum Erzielen der vorgegebenen Geschwindigkeit (V) von den Pedalen erforderlichen Kraft (Kₚ) und im Freilauf die auf das simulierte Fahrrad von außen zur Beschleunigung einwirkende Kraft (K_{bF}) abgibt, daß
g) ein Schalter (A3) vorgesehen ist, der im Antriebszustand (A) geschlossen und im Freilaufzustand offen ist, und mit dem das Signal (K_{P}) für die von den Pedalen erforderlichen Antriebskraft zu- und abschaltbar ist, daß
h) eine Multiplizierstufe (27) mit einer Bewertungseinrichtung (C2) vorgesehen ist, in der das Kraftsignal (K_{P}) mit dem Übersetzungsverhältnis (i) multiplizierbar ist und die das an den Pedalen aufgebrachte Drehmoment (M) abgibt, daß
i) das so berechnete Drehmoment (M) als Momenten-Sollwert (M_{Soll}) für die Abbremseinheit (6) ausgebbasr ist, daß
j) ein Schalter (A4) vorgesehen ist, der im Antriebszustand (A) offen und im Freilaufzustand geschlossen ist und mit dem das Signal (K_{bF}) für die Beschleunigungskraft im Freilauf ab- und zuschaltbar ist, daß
k) eine Integrationsstufe (28) mit einem Bewertungsfaktor (C3) vorgesehen ist, mittels derer im Freilaufzustand aus dem Beschleunigungssignal (K_{bF}) das Geschwindigkeitssignal (V) berechenbar ist und dessen Ausgang im Antriebszustand immer dem Geschwindigkeitssignal (V) nachgeführt wird, daß
l) eine Subtraktionsstufe (29) vorgesehen ist, der die Drehzahl (n_{R}) des Kettenritzels und die über eine Bewertungseinrichtung (1/C7) aus der Geschwindigkeit (V) berechnete Drehzahl (n_{H}) des Hinterrades zuführbar sind, daß
m) eine Kippstufe (30) vorgesehen ist, der der Ausgang der Subtraktionsstufe (29) zuführbar ist und die ein digitales Signal (S) abgibt, wenn die Drehzahl (n_{R}) des Ritzels gleich oder größer als die Drehzahl (n_{H}) des Hinterrades ist, daß
n) eine Kippstufe (31) vorgesehen ist, der der Ausgang (Kₐₙ) der Additionsstufe (26) zuführbar ist und die ein digitales Signal (R) abgibt, wenn die von den Pedalen erforderliche Antriebskraft (K_{P}) negativ ist, daß
o) ein Flip-Flop (32) vorgesehen ist, welches vom Ausgang (S) der Kippstufe (30) gesetzt und vom Ausgang (R) der Kippstufe (31) rückgesetzt wird und welches das digitale Signal (A) für den Antriebszustand abgibt und daß
p) ein Relais oder eine Signalverzweigung (33) vorgesehen ist, welches vom Ausgang (A) des Flip-Flops (32) ansteuerbar ist, welches die vier Signale zur Betätigung der Schalter (A1, A2, A3, und A4) abgibt.

4. Vorrichtung nach Anspruch 1, **dadurch gekennzeichnet,** daß
a) die Sportart des Skilanglaufs simuliert wird, daß
b) der Bewegungsmechanismus (7) zwei Fußschlitten (84a und 84b), zwei Hebelarme (85a und 85b) mit Handgriffen (86a und 86b), eine Kraftübertragungseinrichtung und die Abbremseinheit (6) umfaßt, daß
c) als Bewegungsphasen des Skilangläufers die Schrittstellungen und die Armstellungen darstellbar sind, daß
d) als Bewegungsfrequenz (F_{B}) des Benutzers die Frequenz der Fußschlitten (84a und 84b) oder die Frequenz der Hebelarme (85a und 85b) verwendet wird und daß
e) als Meßeinrichtung zur Erfassung der Bewegungsgeschwindigkeit des Benutzers die Meßstelle (87) für die Frequenz eines Fußschlittens (84b) oder die Meßstelle (88) für die Frequenz eines Hebelarms (85b) verwendet wird.

5. Vorrichtung nach Anspruch 4, **dadurch gekennzeichnet,** daß
a) die Kraftübertragunseinrichtung zum Teil aus Ketten oder Seilen (89a und 89b) besteht, die an den Fußschlitten (84a und 84b) befestigt sind und aus Freilaufgetreiben (90a und 90b) mit Rückstellfeder, welches die Abbremseinheit (6) in Vorwärts-Richtung antreibt, daß
b) hinten hochgebogene Schienen (91a und 91b) vorgesehen sind, auf denen die Fußschlitten (84a und 84b) gleitend oder rollend befestigt sind, daß
c) Schnallen (92a und 92b) an den Fußschlitten (84a und 84b) zum Anschnallen der Füße des Benutzers vorgesehen sind und daß
d) die Hebelarme (85a und 85b) über Freilaufgetriebe (93a und 93b) auf die Abbremseinheit (6) einwirken.

6. Vorrichtung nach Anspruch 1, **dadurch gekenn**zeichnet, daß
a) die Sportart des Kraulens auf dem Wasser oder unter Wasser in stehender Haltung des Benutzers simuliert wird, daß zu diesem Zweck
b) der Bewegungsmechanismus (7) zwei kreisbogenförmig geführte Fußständer (95) beinhaltet, die über ein zweiseitiges Getriebe (98) sowohl in Vorwärts-Richtung als auch in Rückwärts-Richtung Drehmomente auf den Drehanker der Abbremseinheit (6) übertragen, daß
c) der Bewegungsmechanismus (7) weiterhin zwei Hebel arme (96) mit Handgriffen (97) enthalt, die in Schulterhöhe des Benutzers drehbar gelagert sind, daß
d) die Hebel arme (96) über Freilaufgetriebe (99) auf die Abbremseinheit (6) einwirken, daß
e) als Bewegungsphasen des Schwimmers die Bein- und Armstellungen in Längsrichtung des Schwimmers darstellbar sind und daß
f) als Bewegungsfrequenz (F_{B}) des Benutzers die Frequenz der Hebelarme (96) verwendet wird.

7. Vorrichtung nach Anspruch 1, **dadurch gekennzeichnet,** daß
a) als Sportgerät (1) ein Laufband (106) verwendet wird, welches einen Antriebsmotor (109) enthält. dessen Drehzahl (Nᵢₛₜ) mittels des Reglers (20) regelbar ist, daß
b) die Schrittfrequenz des Läufers durch eine Lichtschranke (107) oder einen Drucksensor (108) meßbar und als Bewegungsfrequenz (F_{B}) ausgebbar ist, daß
c) als Bewegungsphasen des Läufers die Bein- und Armstellungen darstellbar sind, daß
d) das Überschreiten (UEV) einer vorderen Schrittdistanz durch eine Lichtschranke (110) oder einen Drucksensor (111) und das Überschreiten (UEH) einer hinteren Schrittdistanz durch eine Lichtschranke (112) oder einen Drucksensor (113) meßbar sind, daß
e) ein Integrator (114) vorgesehen ist, der den Drehzahlsollwert (nₛₒₗₗ) für den Antriebsmotor (109) des Laufbandes (106) bildet, daß
f) eine Subtraktionsstelle (110) vorgesehen ist, dessen positivem Eingang das Signal (UEV) und dessen negativem Eingang das Signal (UEH) zuführbar sind und dessen Ausgang über einen von der Tastatur (61) aus zu betätigenden Umschalter (115) dem Eingang des Integrators (114) zuführbar ist und daß
g) dem Umschalter (115) der Ausgang einer weiteren Subtraktionsstufe (116) zuführbar ist, dessen Eingänge durch von der Tastatur (61) aus zu betätigende Signale "Höher" und "Tiefer" gebildet werden.

8. Vorrichtung nach Anspruch 7, **dadurch gekennzeichnet,** daß
a) in der Mitte des Laufbandes (106) mehrere vertikal übereinander angeordnete Lichtschranken (107a und 107b) vorgesehen sind, die Hürden verschiedener Höhe nachbilden, daß
b) auf dem Monitor Hürden darstellbar sind, deren Höhe über die Tastatur (61) vorgebbar ist, daß
c) ein akkustisches oder ein optisches Signal ausgebbar ist, wenn die Sprunghöhe des Benutzers die Höhe der vorgewählten Lichtschranke nicht erreicht und daß
d) die Zahl der Schritte zwischen den Hürden über die Tastatur (61) vorgebbar ist.

## Claims

1. An apparatus for simulating a sports discipline in which amounts of travel are achieved by the user's muscular force, the apparatus employing a sports appliance (1) with a movement mechanism (7) comprising a braking unit (6) or a driving unit (6a), with an image screen (8) on which it is possible to display to the simulated sportsperson a perspective image of an environment with bends, slopes and gradients and opponents, and with a keyboard (61) for the input of data, a measuring means (11) for measuring the speed of movement and/or number of rotations (n) of the movement mechanism, a measuring device (19) for measuring the braking force and/or torque (Mᵢₛₜ) of the movement mechanism, a video generator (9) with an image storage means, a computer (10) with which the environmental image can be varied as a function of operating data of the movement mechanism such as for example the number of rotations (n), with the performance data of the user and revertive signals concerning selected operating conditions can be displayed on the image screen, characterised in that
a) the image of the simulated environment can be produced on the image screen (8) via the computer (10) and in that
b) with the computer (10) and the associated input/output components, by varying the software and by interchanging the sports appliance, various sports disciplines such as cycling, rowing, paddling, cross-country skiing, swimming, running, staircase climbing, climbing and the like can be simulated as a function of physical circumstances in the exercise of the sports discipline and as a function of selectable geometric reference values of a model and in that
c) the video generator (9) contains a partial image storage means (50) for storing the images of a sportsman in various phases of movement and oblique positions of constant value, viewed from the rear, with which the user identifies and in that the movement phases and oblique positions of this identification image can be calculated by the computer (10) and in that
d) a controller (20) is provided with which the braking force (Mᵢₛₜ) and/or the number of rotations of different movement mechanisms (7) can be made to follow a desired value (Mₛₒₗₗ) which can be emitted by the computer.

2. An apparatus according to Claim 1, characterised in that
a) the image of the opponent can be brought into an oblique position by linear horizontal offset of the individual lines and in that
b) this oblique position can be calculated by means of a squaring stage (70) and a multiplier stage (71) from the product of the bend curvature (KK) times the speed (V²).

3. An apparatus according to Claim 1, characterised in that in the travel computer (10)
a) via the keyboard (61), values (1) between 1 and 12 can be input into the computer (10) in keeping with the twelve gears of a racing bicycle gear-change mechanism and in that
b) a multiplier stage (12) is provided with an evaluating means (C1) in which the revolutions signal (n) can be multiplied by the signal (i) for the selected gear, taking into account the constant factor (C1) and which emits the signal for the revolutions (n_{R}) of the simulated chain pinion of a bicycle with a chain-based gear change mechanism and in that
c) a switch (A1) is provided which is closed in the driving condition (A) and open in the freewheeling condition and the effect of which is that in the driving condition the speed signal (V) is calculated via a constant factor (C7) from the revolutions signal (n_{R}) of the chain pinion and in that
d) a differentiating stage (25) is provided which has a constant evaluation factor (C5) by means of which, from the speed signal (V), it is possible to calculate the acceleration force (K_{bA}) needed to accelerate the simulated vehicle in the driving condition and in that
e) a switch (A2) is provided which is closed in the driving condition (A) and open in the freewheeling condition and with which it is possible to include and exclude the acceleration signal (K_{bA}) and in that
f) an additional stage (26) is provided to which the signals (K_{w}) for the wind force (K_{bA}) for acceleration in the driving condition, (K_{S}) for the gravity and a constant friction force (K_{R}) can be fed and which delivers at the output (Kₐₙ) in the driving condition the force (K_{P}) required from the pedals in order to achieve the given speed (V) and in the freewheeling state the force (K_{bF}) acting on the simulated bicycle from outside for acceleration purposes when the bicycle is in the freewheeling condition and in that
g) a switch (A3) is provided which is closed in the driving condition (A) and open in the freewheeling condition and with which the signal (Kₚ) for the driving force needed from the pedals can be included and excluded and in that
h) a multiplier stage (27) is provided with an evaluating means (C2) in which the force signal (Kₚ) can be multiplied by the transmission ratio (1) and which delivers the torque (M) applied at the pedals and in that
i) the torque (M) calculated in this way can be delivered as a desired moment (Mₛₒₗₗ) for the braking unit (6) and in that
j) a switch (A4) is provided which is open in the driving (A) end closed in the freewheeling condition and with which the signal (K_{bF}) for the acceleration force during freewheeling can be excluded and included and in that
k) an integrating stage (28) with an assessment factor (C3) is provided by means of which in the freewheeling state the speed signal (V) can be calculated from the acceleration signal (K_{bF}) and the output of which can, in the driving condition, always follow the speed signal (V) and in that
l) a subtraction stage (29) is provided to which it is possible to feed the rotary speed (n_{R}) of the chain pinion and the rotary speed (n_{H}) of the rear wheel calculated from the speed (V) via an evaluating means (1/C7) and in that
m) a flip-flop stage (30) is provided to which the output from the subtraction stage (29) can be fed and which delivers a digital signal (S) when the rotary speed (n_{R}) of the pinion is equal to or greater than the rotary speed (n_{H}) of the rear wheel and in that
n) a flip-flop stage (31) is provided to which the output (Kₐₙ) of the addition stage (26) can be fed and which delivers a digital signal (R) when the driving force (K_{P}) needed from the pedals is negative and in that
o) a flip-flop (32) is provided which is set by the output (S) of the flip-flop stage (30) and re-set by the output (R) of the flip-flop stage (31) and which delivers the digital signal (A) for the driving condition and in that
p) a relay or a signal branching means (33) is provided which can be actuated by the output (A) of the flip-flop (32) which delivers the four signals to actuate the switches (A1, A2, A3 and A4).

4. An apparatus according to Claim 1, characterised in that
a) the sport of cross-country skiing is simulated and in that
b) the movement mechanism (7) comprises two foot slides (84a and 84b), two lever arms (85a and 85b) with handles (86a and 86b), a force-transmitting means and a braking unit (6) and in that
c) the striding positions and arm positions can be displayed as the movement phases of the cross-country skier and in that
d) the frequency of the foot slides (84a and 84b) or the frequency of the lever arms (85a and 85b) are used as the movement frequency (F_{B}) of the user and in that
e) as a measuring means for ascertaining the movement speed of the user the measuring point (87) for the frequency of a foot slide (84b) or the measuring point (88) for the frequency of a lever arm (85b) is used.

5. An apparatus according to Claim 4, characterised in that
a) the force-transmitting means consists partly of chains or cables (89a and 89b) which are fixed to the foot slides (84a and 84b) and freewheel transmissions (90a and 90b) with return springs driving the braking unit (6) in a forwards direction and in that
b) rearwardly upwardly bent rails (91a and 91b) are provided on which the foot slides (84a and 84b) are mounted to slide or roll and in that
c) buckles (92a and 92b) are provided on the foot slides (84a and 84b) for securing the feet of the user and in that
d) the lever arms (85a and 85b) act on the braking unit (6) via freewheel transmissions (93a and 93b).

6. An apparatus according to Claim 1, characterised in that
a) the sports discipline of the crawl on the water or underwater is simulated with the user in a standing attitude and in that for this purpose
b) the movement mechanism (7) comprises two arcuately guided foot stands (95) which via a bilateral transmission (98) transmit in the forwards direction and also in the reverse direction torque levels to the armature of the braking unit (6) and in that
c) the movement mechanism (7) further contains two lever arms (96) with handles (97) which are mounted to rotate at the height of the user's shoulders and in that
d) the lever arms (96) act on the braking unit (6) through freewheeling transmission (99) and in that
e) the leg and arm positions in the longitudinal direction of the swimmer can be displayed as the movement phases of the swimmer and in that
f) the frequency of the lever arms (96) is used as the movement frequency (F_{B}) of the user.

7. An apparatus according to Claim 1, characterised in that
a) as a sports appliance (1) a running belt (106) is used which contains a driving motor (109) the rotary speed (Nᵢₛₜ) of which can be regulated by the controller (20) and in that
b) the striding frequency of the runner can be measured by a pressure sensor (108) or a light barrier (107) and delivered as a movement frequency (F_{B}) and in that
c) the leg and arm positions of the runner can be displayed as movement phases and in that
d) the over-striding (UEV) of a front striding distance can be measured by a light barrier (110) or a pressure sensor (111) and the over-striding (UEH) of a rear striding distance can be measured by a light barrier (112) or a pressure sensor (113) and in that
e) an integrator (114) is provided which constitutes the desired rotary speed (nₛₒₗₗ) for the driving motor (109) of the running belt (106) and in that
f) a subtraction stage (110) is provided to the positive input of which the signal (UEV) is fed and to the negative input of which the signal (UEH) can be fed and the output from which can be fed to the input of the integrator (114) via a change-over switch (115) which can be actuated from the keyboard (61) and in that
g) to the change-over switch (115) it is possible to feed the output of a further subtraction stage (116) the inputs of which are constituted by "higher" and "lower" signals which can be actuated from the keyboard (61).

8. An apparatus according to Claim 7, characterised in that
a) in the middle of the running track (106) there are a plurality of vertically Superimposed light barriers (107a and 107b) which emulate hurdles of various heights and in that
b) displayed on the monitor are hurdles the height of which can be determined via the keyboard (61) and in that
c) an acoustic or a visual signal can be delivered when the jumping height of the user does not reach the height of the pre-selected light barrier and in that
d) the number of strides between the hurdles can be predetermined via the keyboard (61).

## Revendications

1. Dispositif de simulation de l'exercice d'un sport, dans lequel l'utilisateur se sert de sa force musculaire pour parcourir des distances, en utilisant un exerciseur (1) représentatif de sport équipé d'un mécanisme cinématique (7) comprenant une unité de freinage (6) ou une unité d'entraînement (6a), un écran (8) sur lequel apparaît la vue en perspective qu'a le sportif en simulation d'un environnement avec ses virages, ses montées, ses descentes et ses concurrents, un clavier (61) d'introduction des données, un dispositif de mesure (11) indiquant la vitesse de déplacement et/ou de rotation (n) du mécanisme cinématique, un dispositif de mesure (19) de la force de freinage et/ou du couple (Mᵢₛₜ) du mécanisme cinématique, un générateur vidéo (9) et son stockage d'images, un ordinateur (10) permettant de faire varier l'image de l'environnement en fonction des paramètres de fonctionnement du mécanisme cinématique, tels que la vitesse de rotation (n) par exemple, et permettant également d'afficher les performances de l'utilisateur ainsi que le rappel des conditions de fonctionnement choisies, dispositif caractérisé en ce que :
a. l'ordinateur (10) permet d'obtenir, sur l'écran, l'image simulée de l'environnement,
b. l'ordinateur (10) et ses modules d'entrée et de sortie associés permettent, par changement du programme et de l'exerciseur spécifique au sport concerné de simuler différents sports, tels que cyclisme, aviron, kayak, ski de fond, natation, course à pied, escalade, varappe et autres, en fonction des données physiques relatives à ce sport et en fonction des paramètres géométriques de référence, sélectionnables, d'un modèle,
c. le générateur vidéo (9) est équipé d'un réservoir d'images élémentaires (50) permettant de délivrer des images de grandeur constante d'un sportif ou par l'arrière à différentes phases de son mouvement et selon diverses inclinaisons, images auxquelles s'identifie l'utilisateur, les phases du mouvement ainsi que les inclinaisons de ces images d'identification pouvant être calculées par l'ordinateur,
d. un régulateur (20) permet de régler la force de freinage (Mᵢₛₜ) et/ou la vitesse de rotation des divers mécanismes cinématiques (7) à une valeur imposée (Mₛₒₗₗ) établie par l'ordinateur.

2. Dispositif selon la revendication 1, caractérisé en ce que :
a. l'image du concurrent peut être amenée en position inclinée par déplacement rectiligne horizontal des différentes lignes de l'image,
b. cette position inclinée peut être calculée à partir du produit de la courbure du virage (KK) par le carré de la vitesse (V²), au moyen d'un étage d'élévation au carré (70) et d'un étage multiplicateur (71).

3. Dispositif selon la revendication 1, caractérisé en ce que l'ordinateur de marche (10) comprend :
a. le clavier (61) permet d'entrer dans l'ordinateur, les valeurs (i) comprises entre 1 et 12, correspondant aux douze rapports de changement de vitesse de la bicyclette de course,
b. un étage multiplificateur (60) équipé d'un dispositif de performance (C1) dans lequel le signal de vitesse de rotation (n) peut être multiplié par le signal (i) correspondant au rapport de vitesse choisi, avec prise en compte du facteur (C1) constant, et qui délivre le signal correspondant à la vitesse de rotation (n_{R}) du pignon simulé de bicyclette,
c. un contacteur (A1), fermé en position d'entraînement (A) et ouvert en position de roue libre, de sorte qu'en position d'entraînement le signal de vitesse (V) est calculé par application d'un facteur constant (C7) au signal de vitesse de rotation (n_{R}) du pignon à chaîne,
d. un étage différenciateur (25) à facteur de performance constant (C5), servant à calculer, à partir du signal de vitesse (V) la force (K_{bA}) nécessaire à l'accélération de la bicyclette simulée en état d'entraînement,
e. un contacteur (A2), fermé en état d'entraînement et ouvert en roue libre, permettant le passage ou l'interruption du signal d'accélération (K_{bA}),
f. un étage d'addition (26) qui peut recevoir les signaux (K_{W}) correspondant à la résistance de l'air, (K_{bA}) correspondant à l'accélération en état d'entraînement, (K_{S}) à la force de pesanteur et (K_{R}) à une force constante de frottement qui délivre à sa sortie (Kₐₙ), la valeur en état d'entraînement de la force (Kₚ) nécessaire aux pédales pour obtenir la vitesse (V) imposée et, en roue libre, la force (K_{bF}) d'origine externe accélérant la bicyclette simulée,
g. un contacteur (A3), fermé en état d'entraînement et ouvert en roue libre, permettant le passage ou l'interruption du signal (Kₚ) correspondant à la force nécessaire aux pédales,
h. un étage de multiplication équipé d'un dispositif de performance (C2), qui multiplie le signal de force (Kₚ) par le rapport de démultiplication (i) et calcule le couple (M) aux pédales,
i. le couple (M) ainsi calculé sert de valeur imposée (Mₛₒₗₗ) au couple de l'unité de freinage,
j. un contacteur (A4), ouvert en état d'entraînement et fermé en roue libre, permettant le passage ou l'interruption du signal (S_{bF}) correspondant à la force (K_{bF}) d'accélération en roue libre,
k. un étage d'intégration (28) avec facteur de performance (C3), servant à calculer, en roue libre, le signal de vitesse (Y) à partir du signal d'accélération (K_{bF}) et dont la sortie, en état d'entraînement, est toujours raccordée au signal de vitesse (V),
l. un étage de soustraction (29) qui peut recevoir la vitesse de rotation (n_{R}) du pignon et la vitesse de rotation (n_{H}) de roue arrière, calculée à partir de la vitesse (V) par l'intermédiaire d'un dispositif (1/C7),
m. une bascule (30) qui peut être raccordée à l'étage de soustraction (29) et qui délivre un signal numérique (S) lorsque la vitesse de rotation (n_{R}) du pignon égale ou dépasse la vitesse de rotation (n_{H}) de la roue arrière,
n. une bascule (31) qui peut être raccordée à la sortie (Kₐₙ) de l'étage d'addition (26) et qui délivre un signal numérique (R) lorsque la force d'entraînement nécessaire aux pédales devient négative,
o. un flip-flop, excité par la sortie( S) de la bascule (30) et désexcitée par la sortie (R) de la bascule (31) qui délivre le signal numérique (A) correspondant à l'état d'entraînement,
p. un relais ou une déviation de signal (33) pilotable par la sortie (A) du flip-flop et délivrant les quatre signaux d'actionnement des contacteurs (A1. A2. A3. A4).

4. Dispositif selon la revendication 1, caractérisé en ce que :
a. le sport simulé est le ski de fond,
b. le mécanisme cinématique (7) comprend deux patins (84a et 84b) deux bras de levier (85a et 85b) équipés de poignées (86a et 86b), un dispositif de transmission des forces et une unité de freinage (6),
c. en tant que phases du mouvement du skieur, les positions des pieds et des bras peuvent être visionnées,
d. on peut utiliser comme fréquence du mouvement (F_{B}) de l'utilisateur, la fréquence des patins (84a et 84b) ou la fréquence des bras de levier (85a et 85b),
e. on peut utiliser, pour mesurer la vitesse de l'utilisateur, le poste (87) mesurant la fréquence d'un patin (84b) ou le poste (88) mesurant la fréquence d'un bras de levier (85b).

5. Dispositif selon la revendication 4, caractérisé en ce que :
a. le dispositif de transmission des forces est constitué en partie de chaînes ou de câbles (89a et 89b) fixés aux patins (84c et 84b) et du mécanisme a roue libre (90a et 90b) équipés de ressorts de rappel qui entraînent l'unité de freinage (6) en marche avant,
b. des rails (91a et 91b) sont relevés vers l'arrière, sur lesquels sont fixés les patins (84a et 84b) glissant ou roulant,
c. sur les patins (84a et 84b), sont prévues des boucles (92a et 92b) de fixation des pieds de l'utilisateur,
d. les bras de levier (85a et 85b) sont reliés à l'unité de freinage (6) par des mécanismes à roue libre (93a et 93b).

6. Dispositif selon la revendication 1, caractérisé en ce que :
a. le sport simulé est le crowl avec le corps sur l'eau ou sous l'eau, mais en position debout de l'utilisateur et à cette fin,
b. le mécanisme cinématique (7) comprend deux repose-pieds (95) à mouvement circulaire, dont les déplacements ont leurs couples transmis par un mécanisme bilatéral (98) en avant comme en arrière, à l'endroit de l'unité de freinage (6),
c. le mécanisme cinématique (7) comporte aussi deux bras de levier (96), munis de poignées et articulés en rotation à la hauteur des épaules de l'utilisateur
d. les bras de levier (96) sont reliés à l'unité de freinage (6) par un mécanisme à roue libre (99),
e. comme phases du mouvement du nageur, on peut visionner les positions des bras et des jambes du nageur en position allongée,
f. comme fréquence du mouvement (F_{B}) de l'utilisateur, on utilise la fréquence des bras du levier (96).

7. Dispositif selon la revendication 1, caractérisé en ce que :
a. l'exerciseur (1) comporte une bande courante (106) entraînée par un moteur (19), dont la vitesse (Mᵢₛₜ) est réglée par un régulateur (20),
b. la fréquence des pas du coureur peut être mesurée au moyen d'une barrière lumineuse (107) ou d'un détecteur à pression (108) et délivrée en tant que fréquence (F_{B}) du mouvement,
c. comme phases de mouvement, on peut visionner les positions des bras et des jambes.

8. Dispositif selon la revendication 7, caractérisé en ce que :
a. au milieu de la bande courante (106), plusieurs ampoules lumineuses (107a et 107b) sont prévues verticalement les unes au-dessus des autres qui indiquent des haies de différentes hauteurs,
b. sur le moniteur des haies sont représentées, dont la hauteur est programmée sur le clavier (61),
c. un signal acoustique et optique est délivré si la hauteur du saut de l'utilisateur n'atteint pas la hauteur de l'ampoule choisie précédemment,
d. le nombre de pas entre la haie est programmé par le clavier (61).
